# EUROPEAN PATENT APPLICATION

(11) **EP 4 653 311 A1**
(43) Date of publication of application: **26.11.2025**
(21) Application number: 24803246.8
(22) Date of filing: 31.01.2024
(51) Int. Cl.: B63H 21/38, B01D 53/14, B01D 53/58, B01D 53/78, B01D 53/92, C01C 1/12, C02F 1/461

(54) **AMMONIA DETOXIFICATION SYSTEM, FLOATING BODY, AND AMMONIA SUPPLY METHOD**

(30) Priority: 08.05.2023 JP 2023076891
(71) Applicant: Mitsubishi Heavy Industries, Ltd., Tokyo 100-8332 (JP)
(72) Inventor: YAMADA, Daisuke, Yokohama-shi, Kanagawa 220-8401 (JP); TAKAMATSU, Tomoteru, Yokohama-shi, Kanagawa 220-8401 (JP); YOSHIDA, Atsushi, Yokohama-shi, Kanagawa 220-8401 (JP)
(74) Representative: Studio Torta S.p.A.
(86) International application number: PCT/JP2024/003044
(87) International publication number: WO 2024/232131

(57) **Abstract**

An ammonia abatement system includes: a gas flow line through which an ammonia-containing gas flows; a first dilution section that causes ammonia contained in the ammonia-containing gas that is supplied from the gas flow line to be absorbed into a first absorbing liquid in a pressurized state; a first sending line through which a gas in a gas phase in the first dilution section is capable of being sent to an outside of the first dilution section as a primary treated gas; a second dilution section that causes ammonia contained in the primary treated gas that is supplied through the first sending line to be absorbed into a second absorbing liquid under a pressure lower than a pressure in the first dilution section; and an adjustment valve that is provided in the first sending line and adjusts supply of the primary treated gas from the first dilution section to the second dilution section.

## Description

### TECHNICAL FIELD

The present disclosure relates to an ammonia abatement system, a floating body, and an ammonia supply method.

Priority is claimed on Japanese Patent Application No. 2023-076891, filed on May 8, 2023, the content of which is incorporated herein by reference.

### BACKGROUND ART

In a floating body such as a marine vessel, there is a case where ammonia is transported as a cargo.

In addition, there is a case where ammonia is used as fuel for a main engine or the like provided in the floating body. The floating body that handles such ammonia includes a tank that stores ammonia, a pipe that is connected to the tank and through which ammonia flows, and the like.

In a tank that stores liquefied ammonia, there is a case where an ammonia gas is produced as a boil-off gas in which the liquefied ammonia in the tank is evaporated due to input heat from the outside. In this case, in order to suppress an excessive increase in the pressure in the tank due to the production of the ammonia gas, there is a case where the produced ammonia gas is discharged to the outside of the tank.

In addition, for example, in a case where some trouble occurs, or the like, there is a case where the inside of the pipe is purged with an inert gas such as nitrogen to discharge the ammonia in the pipe. In this case, a purge gas containing ammonia and an inert gas is discharged from the pipe.

Ammonia may affect the surrounding environment. Therefore, it is not preferable to release the boil-off gas (ammonia gas) or the purge gas, which is discharged from the tank or the pipe, directly into the water or the atmosphere around the floating body.

In Patent Document 1, there is disclosed an ammonia gas abatement system that performs abatement treatment on an ammonia gas before the ammonia gas is released into the atmosphere. In this abatement system, a gas containing ammonia is led into a closed space such as a scrubber or a cooling tower and sufficiently brought into contact with water, so that an ammonia component is absorbed into the water.

### Citation List

### Patent Document

Patent Document 1: Japanese Unexamined Patent Application, First Publication No.2006-026555

### SUMMARY OF INVENTION

### Technical Problem

However, since the ammonia abatement system that is provided in the floating body needs to be installed in a limited space, it is required to further increase an ammonia abatement efficiency.

The present disclosure has been made in order to solve the above-described problems, and an object of the present disclosure is to provide an ammonia abatement system, a floating body, and an ammonia supply method, in which it is possible to further increase the ammonia abatement efficiency.

### Solution to Problem

In order to solve the above-described problems, an ammonia abatement system according to the present disclosure includes a gas flow line, a first dilution section, a first sending line, a second dilution section, and an adjustment valve. An ammonia-containing gas flows through the gas flow line. The first dilution section is configured to cause ammonia contained in the ammonia-containing gas that is supplied from the gas flow line to be absorbed into a first absorbing liquid in a pressurized state. The first sending line sends a gas in a gas phase in the first dilution section to an outside of the first dilution section as a primary treated gas. The second dilution section is configured to cause ammonia contained in the primary treated gas that is supplied through the first sending line to be absorbed into a second absorbing liquid under a pressure lower than a pressure in the first dilution section. The adjustment valve is provided in the first sending line. The adjustment valve is configured to adjust supply of the primary treated gas from the first dilution section to the second dilution section.

A floating body according to the present disclosure includes: a floating body main body; and the ammonia abatement system as described above. An ammonia supply method according to the present disclosure includes: adjusting a supply amount of the ammonia water to the denitration device or the concentration of the ammonia water, based on at least one of the nitrogen oxide concentration of the exhaust gas that is discharged from the denitration device and the ammonia concentration of the exhaust gas that is discharged from the denitration device.

### Advantageous Effects of Invention

According to the ammonia abatement system, the floating body, and the ammonia supply method of the present disclosure, it is possible to further increase the ammonia abatement efficiency.

### BRIEF DESCRIPTION OF DRAWINGS

[FIG. 1] A side view of a floating body including an ammonia abatement system and a floating body according to an embodiment of the present disclosure.
[FIG. 2] A diagram showing the configuration of an ammonia abatement system according to a first embodiment of the present disclosure.
[FIG. 3] A diagram showing the configuration of an ammonia abatement system according to a first modification example of the first embodiment of the present disclosure.
[FIG. 4] A diagram showing the configuration of an ammonia abatement system in a second modification example of the first embodiment of the present disclosure.
[FIG. 5] A diagram showing the configuration of an ammonia abatement system in a third modification example of the first embodiment of the present disclosure.
[FIG. 6] A diagram showing the configuration of an ammonia abatement system according to a second embodiment of the present disclosure.
[FIG. 7] A diagram showing the configuration of an ammonia abatement system according to a first modification example of the second embodiment of the present disclosure.
[FIG. 8] A diagram showing the configuration of an ammonia abatement system according to a third embodiment of the present disclosure.
[FIG. 9] A diagram showing the configuration of an ammonia abatement system according to a first modification example of the third embodiment of the present disclosure.
[FIG. 10] A diagram showing the configuration of an ammonia abatement system according to a modification example of the first to third embodiments of the present disclosure.

### DESCRIPTION OF EMBODIMENTS

### <First Embodiment>

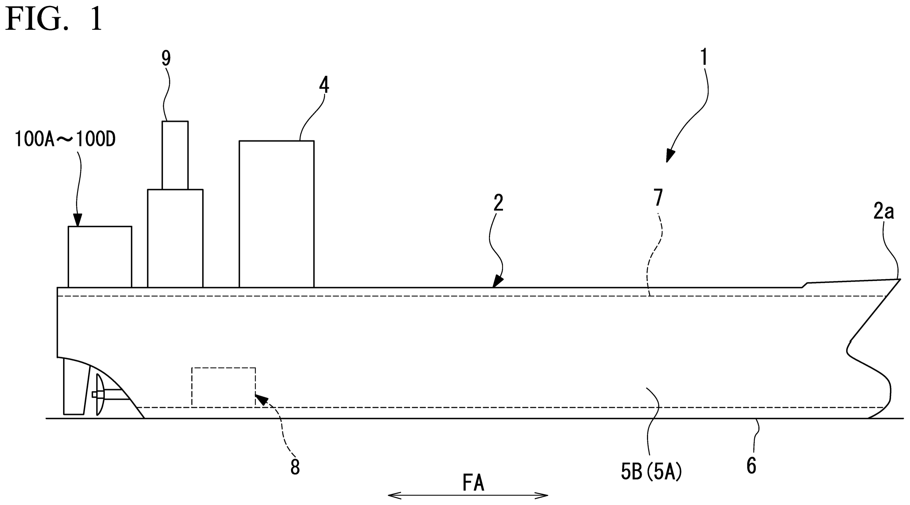

Hereinafter, an ammonia abatement system, a floating body, and an ammonia supply method according to an embodiment of the present disclosure will be described with reference to FIGS. 1 to 9.

### (Overall Configuration of Floating Body)

As shown in FIG. 1, a floating body 1 of an embodiment of the present disclosure includes a floating body main body 2, a superstructure 4, a combustion device 8, and an ammonia abatement system 100A. In this embodiment, a marine vessel capable of being navigated by a main engine or the like will be described as an example of the floating body 1. A ship type of the floating body 1 is not limited to a specific ship type. As the ship type of the floating body 1, a liquefied gas carrier, a ferry, a RORO ship, an automobile carrier, a passenger ship, or the like can be given. In this embodiment, a case where the floating body 1 is a marine vessel is described. However, the floating body 1 is not limited to a marine vessel and may be a floating storage unit (FSU), a floating storage and regasification unit (FSRU), or the like, which cannot be navigated by a main engine or the like.

The floating body main body 2 is formed to float on seawater. The floating body main body 2 has a pair of broadsides 5A and 5B and a bottom 6 forming an outer shell thereof. The broadsides 5A and 5B include a pair of broadside outer plates forming each of the left and right broadsides. The bottom 6 includes a bottom outer plate that connects the broadsides 5A and 5B. The floating body main body 2 further includes an upper deck 7 which is a full deck disposed on the uppermost layer. The superstructure 4 is formed on the upper deck 7. A residential area or the like is provided in the superstructure 4. In the floating body 1 of this embodiment, for example, a cargo space (not shown) for loading cargo is provided on the bow 2a side in the fore and aft direction FA with respect to the superstructure 4. The configuration of the floating body main body 2 is not limited in any way and may be a configuration other than that described above.

The combustion device 8 is a device that generates thermal energy by burning fuel, and is provided in the floating body main body 2. As the combustion device 8, an internal combustion engine that is used for a main engine for propelling the floating body 1, an internal combustion engine that is used for a power generation facility that supplies electricity to the marine vessel, a boiler that generates steam as an operating fluid, or the like can be provided as an exemplary example. In the combustion device 8 that is used as the main engine in the floating body 1 of this embodiment, ammonia and other fuel such as heavy oil different from ammonia can be switched and used as fuel. A fuel system (not shown) that supplies fuel is connected to the combustion device 8. In the fuel system, ammonia and other fuel flow.

In a case of switching the fuel of the combustion device 8 from ammonia to other fuel or in a case of performing maintenance, so-called purging is performed in which ammonia remaining in a pipe system including a fuel system of the combustion device 8 is replaced with an inert gas (purge gas) such as nitrogen. Here, the ammonia remaining in the pipe system may be liquefied ammonia or ammonia gas. In order to perform the purging, an inert gas supply device (not shown) is connected to the pipe system. The inert gas supply device can supply an inert gas to the pipe system. The inert gas may be any gas that does not undergo a chemical reaction when being in contact with ammonia, and for example, nitrogen can be provided as an exemplary example. In the inert gas supply device, in a case where an inert gas is supplied from an inert gas supply source (not shown) to the pipe system, ammonia in the pipe system is pushed out by the inert gas. In this way, the purge gas containing ammonia (liquefied ammonia or ammonia gas) and the inert gas is discharged from the pipe system.

### (Configuration of Ammonia Abatement System)

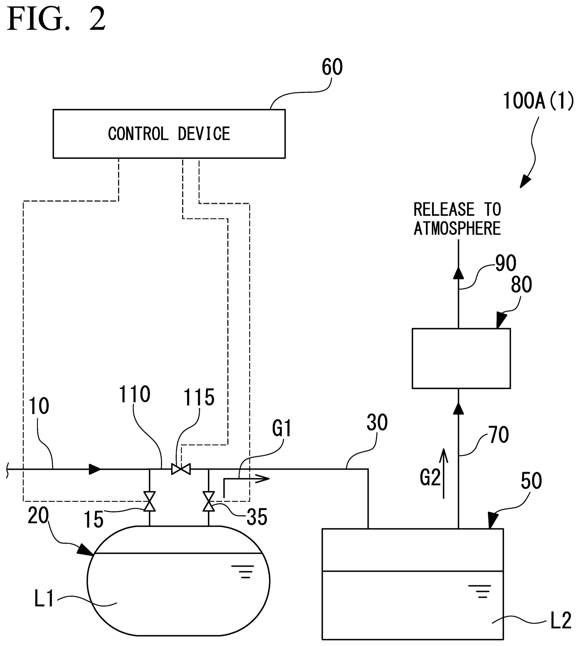

FIG. 2 is a diagram showing the configuration of an ammonia abatement system according to a first embodiment of the present disclosure.

As shown in FIG. 2, the ammonia abatement system 100A includes a gas flow line 10, a first dilution section 20, a first sending line 30, a second dilution section 50, a second sending line 70, a third dilution section 80, and a control device 60.

An ammonia-containing gas flows through the gas flow line 10. As the ammonia-containing gas, for example, a purge gas that is discharged from a pipe system of the combustion device 8 (refer to FIG. 1) during purging, a boil-off gas that is discharged from an ammonia tank, a gas containing ammonia leaked from a pipe or the like and vaporized, or the like can be provided as an exemplary example. The gas flow line 10 leads the flowing ammonia-containing gas to the ammonia abatement system 100A.

An on-off valve 15 is provided in the middle of the gas flow line 10. The on-off valve 15 can open and close a flow path in the gas flow line 10. An opening and closing operation of the on-off valve 15 is controlled by the control device 60 which will be described later. The on-off valve 15 may be an adjustment valve whose opening degree can be adjusted.

A combination of the gas flow line 10 and a bypass line 110 (described later) is not limited to one, and a plurality of combinations may be provided.

The first dilution section 20 causes ammonia contained in the ammonia-containing gas that is supplied from the gas flow line 10 to be absorbed into a first absorbing liquid L1 in a pressurized state. The first dilution section 20 has a hollow structure, and stores, in the inside thereof, the first absorbing liquid L1 capable of absorbing ammonia. As the first absorbing liquid L1, for example, fresh water or seawater can be provided as an exemplary example. In the first dilution section 20, a gas phase and a liquid phase are formed.

The first dilution section 20 is a pressure vessel, and the ammonia-containing gas is introduced into the first dilution section 20 through the gas flow line 10. Here, the ammonia-containing gas flowing through the gas flow line 10 is pressurized to a pressure higher than the atmospheric pressure. Therefore, the ammonia-containing gas introduced into the first dilution section 20 is in a pressurized state in which the ammonia-containing gas is pressurized to a pressure higher than the atmospheric pressure. Then, an ammonia component contained in the ammonia-containing gas introduced into the first dilution section 20 is absorbed into the first absorbing liquid L1 in the pressurized state. In the first dilution section 20 of the present embodiment, for example, ammonia contained in the gas phase is absorbed into the first absorbing liquid L1 until the gas phase and the liquid phase in the first dilution section 20 are in a gas-liquid equilibrium state.

Here, in order to promote the absorption of ammonia by the first absorbing liquid L1, the first dilution section 20 may be configured such that, for example, the liquid phase in the first dilution section 20 is sucked up and sprayed into the upper gas phase in the first dilution section 20 through a spray nozzle or the like. In this way, the first absorbing liquid L1 contained in the liquid phase comes into contact with the ammonia in the gas phase in the first dilution section 20, and the absorption of ammonia is promoted.

The first sending line 30 can send the gas in a gas phase in the first dilution section 20 to the outside of the first dilution section 20 as a primary treated gas G1. One end of the first sending line 30 communicates with the upper part in the first dilution section 20. The other end of the first sending line 30 is connected to the second dilution section 50. That is, the first sending line 30 can send the primary treated gas G1 to the second dilution section 50.

An adjustment valve 35 is provided in the middle of the first sending line 30. The adjustment valve 35 can adjust the supply of the primary gas from the first dilution section 20 to the second dilution section 50. Here, the opening degree adjustment in the adjustment valve 35 may be made such that a flow of the gas is intermittent by switching the flow path in the first sending line 30 between an open state and a closed state. In addition, the adjustment valve 35 can adjust the flow rate of the gas flowing through the flow path in the first sending line 30 by adjusting the opening degree of the flow path in the first sending line 30. The operation of the adjustment valve 35 can be controlled by the control device 60.

The second dilution section 50 is connected to the first sending line 30. The second dilution section 50 causes ammonia contained in the primary treated gas G1 that is supplied through the first sending line 30 to be absorbed into a second absorbing liquid L2 under a pressure lower than the pressure in the first dilution section 20. In the second dilution section 50 of the present embodiment, the ammonia contained in the primary treated gas G1 is absorbed into the second absorbing liquid L2 under the atmospheric pressure.

The second sending line 70 can send the gas in a gas phase in the second dilution section 50 to the outside of the second dilution section 50 as a secondary treated gas G2. One end of the second sending line 70 communicates with the upper part in the second dilution section 50. The other end of the second sending line 70 is connected to the third dilution section 80.

The third dilution section 80 reduces the concentration of ammonia contained in the secondary treated gas G2 that is supplied through the second sending line 70. As the third dilution section 80, any structure may be used as long as it can reduce the concentration of ammonia contained in the secondary treated gas G2. As the third dilution section 80, for example, a dilution fan, a gas combustion unit (GCU), or a catalytic combustion device can be provided as an exemplary example. The dilution fan reduces the ammonia concentration in the secondary treated gas G2 by mixing the outside air (air) taken in from the outside with the secondary treated gas G2. The gas combustion unit (GCU) and the catalytic combustion device reduce the ammonia concentration in the gas by combusting the ammonia contained in the secondary treated gas G2. In addition, the third dilution section 80 may absorb the ammonia contained in the secondary treated gas G2 by an absorbent substance capable of absorbing ammonia, for example, activated carbon or the like. In addition, the third dilution section 80 may be a so-called wet type that absorbs the ammonia contained in the secondary treated gas G2 with an absorbing liquid such as water, as in the second dilution section 50. The third dilution section 80 is not an essential configuration. A configuration in which the third dilution section 80 is not provided can also be adopted. In addition, in addition to the third dilution section 80, another dilution section (for example, a fourth dilution section or the like (not shown)) may be further provided on a rear stage side of the second dilution section 50.

An exhaust line 90 is connected to the third dilution section 80. The exhaust line 90 discharges the gas from which ammonia has been abated by the third dilution section 80 to the atmosphere. As the exhaust line 90, for example, a vent post, a funnel 9 (refer to FIG. 1), or the like provided on the upper deck 7 or the like of the floating body main body 2 can be used.

The control device 60 controls at least the opening and closing operation of each of the on-off valve 15 and the adjustment valve 35.

The control device 60 opens the on-off valve 15 when the ammonia-containing gas is introduced from the gas flow line 10 into the first dilution section 20. The control device 60 closes the on-off valve 15 when the gas is sent from the gas phase in the first dilution section 20 to the outside through the first sending line 30.

The control device 60 controls the operation of each of the on-off valve 15 and the adjustment valve 35 to temporarily store the ammonia-containing gas in the first dilution section 20 until the gas phase in the first dilution section 20 and the liquid phase in the first dilution section 20 are in a gas-liquid equilibrium state in the first dilution section 20, and to perform so-called batch processing. A control target of the control device 60 is not limited to the opening and closing operation of each of the on-off valve 15 and the adjustment valve 35. For example, in a case where a pump (not shown) or the like is provided in the ammonia abatement system 100A, the operation of the pump (not shown) or the like may be controlled.

The control device 60 monitors the ammonia concentration in the gas phase in the first dilution section 20. The control device 60 causes the adjustment valve 35 to transition from a closed state to an open state when the ammonia concentration in the gas phase in the first dilution section 20 falls below a specified value. In this embodiment, when the gas phase in the first dilution section 20 and the liquid phase in the first dilution section 20 are in the gas-liquid equilibrium state, the control device 60 sends the gas in a gas phase in the first dilution section 20 from the first dilution section 20 to the second dilution section 50.

The above-described specified value is, for example, the ammonia concentration higher than the ammonia concentration in a case where the gas-liquid equilibrium state is reached. In a case where it is estimated that the gas-liquid equilibrium state is reached, the ammonia concentration in the gas phase in the first dilution section 20 falls below the specified value. As the specified value, the ammonia concentration slightly higher than the ammonia concentration in the gas-liquid equilibrium state can be provided as an exemplary example. Here, in general, the term "gas-liquid equilibrium state" is a state in which there is no mass transfer between the gas phase and the liquid phase. However, strictly speaking, since the temperature slightly but constantly changes, the mass transfer always occurs.

The control device 60 brings the adjustment valve 35 into a closed state when the ammonia-containing gas is introduced from the gas flow line 10 into the first dilution section 20.

The phrase "control in the control device 60" is not limited to a case where a computer sequentially executes predetermined processing, based on a program set in advance, and includes a so-called remote operation in which an operator who sees a determined value of a pressure sensor or the like performs a predetermined operation on the control device 60 to operate the on-off valve 15 and the adjustment valve 35 by the control device 60.

In addition, the ammonia abatement system 100A in the present embodiment further includes the bypass line 110.

The bypass line 110 bypasses the first dilution section 20 and connects the gas flow line 10 and the first sending line 30. One end of the bypass line 110 is connected to the gas flow line 10 on an upstream side of the on-off valve 15. The other end of the bypass line 110 is connected to the first sending line 30 on a downstream side of the adjustment valve 35. A valve 115 that opens and closes a flow path in the bypass line 110 is provided in the middle of the bypass line 110. In a case where the valve 115 is opened in a state where the on-off valve 15 and the adjustment valve 35 are closed, the bypass line 110 can cause the ammonia-containing gas flowing in the gas flow line 10 to bypass to the first sending line 30 without passing through the first dilution section 20.

The bypass line 110 is not an essential configuration, and a configuration in which the bypass line 110 is not provided can also be adopted. In addition, the control device 60 may control the opening and closing of the valve 115.

### (Operation and Effect)

In the first embodiment, the ammonia contained in the ammonia-containing gas that is supplied from the gas flow line 10 is absorbed into the first absorbing liquid L1 in a pressurized state in the first dilution section 20. Then, the gas in a gas phase in the first dilution section 20 is sent to the outside of the first dilution section 20 through the first sending line 30 as the primary treated gas G1. In addition, in the second dilution section 50, the ammonia contained in the primary treated gas G1 is absorbed into the second absorbing liquid L2 under a pressure lower than that in the first dilution section 20. In this way, the ammonia-containing gas can be retained in the first dilution section 20, and the ammonia can be abated by the batch processing. Therefore, it is possible to abate ammonia with a simple system configuration without using an absorption tower or the like, which is affected by the inclination of a marine vessel. Therefore, the ammonia abatement efficiency can be further increased.

In addition, in the first embodiment, the first dilution section 20 brings the gas phase and the liquid phase in the first dilution section 20 into the gas-liquid equilibrium state. In this way, the ammonia contained in the ammonia-containing gas that is supplied from the gas flow line 10 can be maximally absorbed into the first absorbing liquid L1. Therefore, the gas can be sent to the second dilution section 50 in a state where the ammonia concentration of the gas in a gas phase in the first dilution section 20 is sufficiently reduced.

Further, in the first embodiment, when the ammonia concentration in the gas phase in the first dilution section 20 falls below the specified value, the control device 60 causes the adjustment valve 35 to transition from a closed state to an open state. In this way, the primary treated gas G1 in which the ammonia-containing gas is sufficiently absorbed into the first absorbing liquid L1 in the first dilution section 20 and the ammonia concentration is lower than the specified value can be supplied to the second dilution section 50. In this way, the load of ammonia absorption in the second dilution section 50 is reduced.

In addition, in the first embodiment, the second dilution section 50 causes the ammonia contained in the primary treated gas G1 to be absorbed into the second absorbing liquid L2 under atmospheric pressure. In this way, the second dilution section 50 can have a simple configuration that does not require a device such as a pump for pressurization.

Further, in the first embodiment, the bypass line 110 that bypasses the first dilution section 20 and connects the gas flow line 10 and the first sending line 30 is provided. In this way, when releasing the residual pressure in the gas flow line 10 or the like, the residual pressure of the gas in the gas flow line 10 can be quickly released through the bypass line 110.

In addition, in the first embodiment, the third dilution section 80 is provided. The secondary treated gas G2, which is the gas in a gas phase in the second dilution section 50, is supplied to the third dilution section 80 through the second sending line 70. In the third dilution section 80, the concentration of the ammonia contained in the secondary treated gas G2 can be further reduced.

Furthermore, in the first embodiment, in a case where the ammonia-containing gas is a purge gas containing an inert gas, the purge gas is supplied to the first dilution section 20 through the gas flow line 10. The purge gas that is supplied from the gas flow line 10 is temporarily stored in the first dilution section 20 in a pressurized state, and the ammonia contained in the purge gas is absorbed into the first absorbing liquid L1. Thereafter, the primary treated gas G1, which is the gas in a gas phase in the first dilution section 20, is supplied to the second dilution section 50 through the sending line, and the ammonia contained in the primary treated gas G1 is absorbed into the second absorbing liquid L2 in the second dilution section 50. Therefore, it is possible to efficiently abate the ammonia contained in the purge gas that flows in a large amount through the gas flow line 10 during the purging.

In addition, even in a case where the ammonia-containing gas flowing through the gas flow line 10 is the boil-off gas generated in the ammonia tank, as with the case of the purge gas, the boil-off gas that is supplied from the gas flow line 10 can be temporarily stored in the first dilution section 20 in a pressurized state, and the ammonia in the boil-off gas can be absorbed into the first absorbing liquid L1. Further, the primary treated gas G1 can be supplied to the second dilution section 50, and the ammonia contained in the primary treated gas G1 can be absorbed into the second absorbing liquid L2 in the second dilution section 50.

In this way, the ammonia contained in the boil-off gas produced in the tank capable of storing ammonia can be efficiently abated by the first dilution section 20 and the second dilution section 50.

### (Modification Example of First Embodiment)

In the first embodiment, in the first dilution section 20, the batch processing is performed on the ammonia-containing gas. However, in a case where the ammonia concentration of the ammonia-containing gas is low, the ammonia-containing gas flowing into the first dilution section 20 from the gas flow line 10 may be continuously processed in a state where the on-off valve 15 and the adjustment valve 35 are kept open.

In addition, in the first embodiment, as a method of absorbing the ammonia contained in the primary treated gas G1 into the second absorbing liquid L2, a so-called bubbling method of bringing the gas into contact with the liquid by directly immersing the pipe of the first sending line 30 in the second absorbing liquid L2 to release the primary treated gas G1 into the second absorbing liquid L2 may be used. In this way, the absorption efficiency of the ammonia into the second absorbing liquid L2 can be improved while the second dilution section 50 has a simple configuration.

### (First Modification Example of First Embodiment)

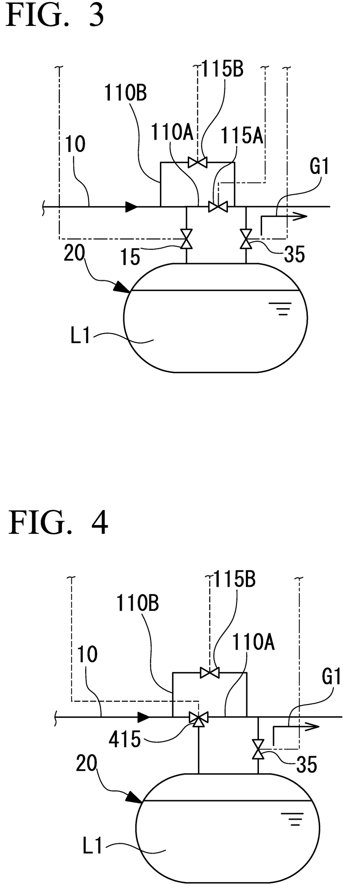

FIG. 3 is a diagram showing the configuration of an ammonia abatement system according to a first modification example of the first embodiment of the present disclosure.

In the first embodiment, a case where only one set of the bypass line 110 and the valve 115 is provided has been described. However, as in the first modification example shown in FIG. 3, bypass lines 110A and 110B may be provided as the bypass line 110, and valves 115A and 115B may be provided as the valve 115 (hereinafter, the same applies to second and third embodiments). The valve 115A is provided in the bypass line 110A, and the valve 115B is provided in the bypass line 110B. In other words, the valve 115B is provided in parallel with respect to the valve 115A. In this way, even in a case where any one of the valves 115A and 115B malfunctions, it is possible to release the residual pressure of the gas flow line 10 by back-up of the other valve. Each of the bypass line 110 and the valve 115 may be provided in three or more.

### (Second Modification Example of First Embodiment)

FIG. 4 is a diagram showing the configuration of an ammonia abatement system in a second modification example of the first embodiment of the present disclosure.

In the first embodiment, a case where the on-off valve 15 is provided in the gas flow line 10 and the valve 115 is provided in the bypass line 110 has been provided as an exemplary example. However, as in the second modification example shown in FIG. 4, one three-way valve 415 may be provided instead of the on-off valve 15 and the valve 115 (hereinafter, the same applies to the second and third embodiments). In the second modification example as well, as with the first modification example, the bypass line 110B and the valve 115B may be provided in parallel with the bypass line 110A and the three-way valve 415. In this way, even in a case where the three-way valve 415 malfunctions, it is possible to release the residual pressure in the gas flow line 10.

### (Third Modification Example of First Embodiment)

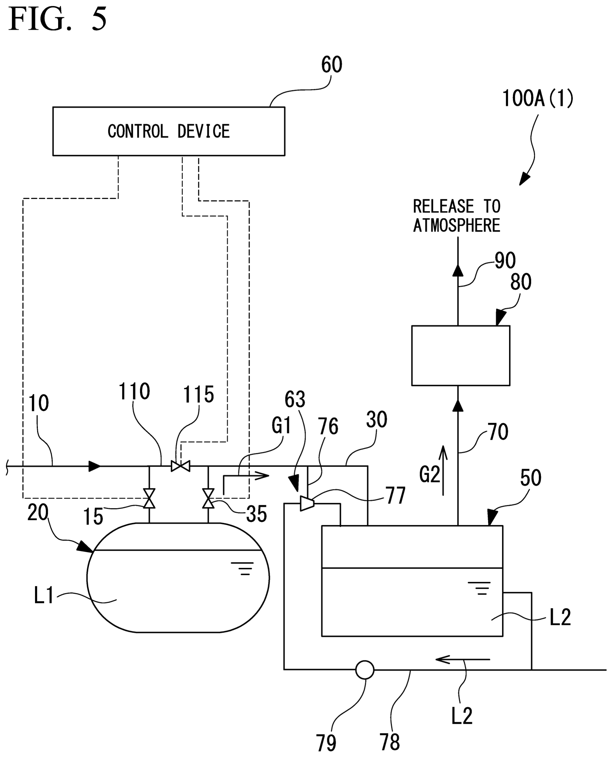

FIG. 5 is a diagram showing the configuration of an ammonia abatement system in a third modification example of the first embodiment of the present disclosure.

In addition to the first embodiment, as in the third modification example of the first embodiment shown in FIG. 5, a mixing section 63 that promotes the absorption of ammonia by the second absorbing liquid L2 may be provided (hereinafter, the same applies to the third embodiment). The mixing section 63 mixes the ammonia-containing gas or the primary treated gas G1 flowing through the first sending line 30 with the second absorbing liquid L2 stored in the second dilution section 50. The mixing section 63 includes a branch line 76, a mixer 77, an absorbing liquid supply line 78, and an absorbing liquid circulation pump 79. The branch line 76 branches from the first sending line 30 and leads the ammonia-containing gas or the primary treated gas G1 flowing through the first sending line 30 to the mixer 77. The mixer 77 mixes the ammonia-containing gas or the primary treated gas G1, which is the gas flowing through the first sending line 30, with the second absorbing liquid L2. As the mixer 77, for example, an ejector, a static mixer, or a microreactor can be used. In this manner, by mixing with the mixer 77, the ammonia gas contained in the ammonia-containing gas or the primary treated gas G1 flowing through the first sending line 30 is easily absorbed into the absorbing liquid. The absorbing liquid supply line 78 supplies the second absorbing liquid L2 of the second dilution section 50 to the mixer 77. The absorbing liquid circulation pump 79 sends the second absorbing liquid L2 of the absorbing liquid supply line 78 to the mixer 77. The mixed fluid mixed by the mixing section 63 is introduced into the second dilution section 50.

In the third modification example of the first embodiment, for example, an on-off valve (not shown) may be provided to be capable of selecting a flow path which causes the gas to directly flow into the second dilution section 50 from the first sending line 30 and a flow path which causes the gas to flow from the first sending line 30 via the branch line 76, the mixer 77, and the absorbing liquid supply line 78. In addition, in the third modification example of the first embodiment, in order to promote the absorption of ammonia by the second absorbing liquid L2 stored in the second dilution section 50, for example, the second absorbing liquid L2 may be sprayed in the upper gas phase in the second dilution section 50 from the absorbing liquid supply line 78 via a spray nozzle or the like.

### <Second Embodiment>

Next, an ammonia abatement system and a floating body according to a second embodiment of the present disclosure will be described. Since the second embodiment is different from the first embodiment only in a configuration in which an air introduction line 260 and a gas suction section 200 are provided, the same parts as those in the first embodiment will be denoted by the same reference signs and described with reference to FIG. 1, and an overlapping description will be omitted.

### (Configuration of Ammonia Abatement System)

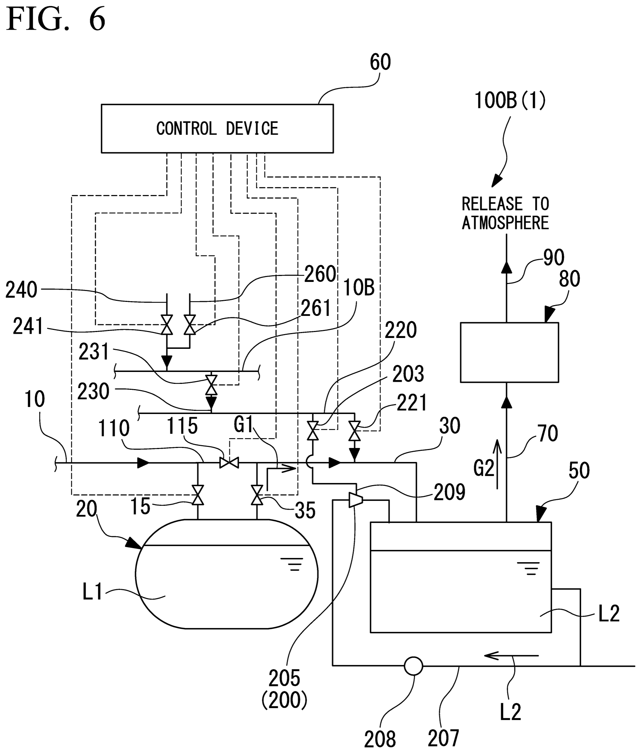

FIG. 6 is a diagram showing the configuration of the ammonia abatement system according to the second embodiment of the present disclosure.

As shown in FIG. 6, an ammonia abatement system 100B includes the gas flow line 10, the first dilution section 20, the first sending line 30, the second dilution section 50, the second sending line 70, the third dilution section 80, the control device 60, the air introduction line 260, and the gas suction section 200.

In addition, the ammonia abatement system 100B in the present embodiment includes an introduction line 220 for introducing the ammonia-containing gas into the second dilution section 50 from a gas flow line 10B located at a position different from the gas flow line 10 connected to the first dilution section 20. The introduction line 220 is connected to the first sending line 30, for example, on a downstream side of the adjustment valve 35. The introduction line 220 may be directly connected to the second dilution section 50 instead of the first sending line 30. The introduction line 220 is provided with an on-off valve 221.

The gas flow line 10B and the introduction line 220 are connected to each other by a connection line 230. An on-off valve 231 is provided in the middle of the connection line 230. A case where the introduction line 220 introduces the ammonia-containing gas from the gas flow line 10B to the second dilution section 50 has been described. However, another gas flow line (not shown) different from the gas flow lines 10 and 10B may be used as the introduction line 220.

In addition, an inert gas introduction line 240 and the air introduction line 260 are connected to the gas flow line 10B. The inert gas introduction line 240 supplies an inert gas (for example, a nitrogen gas) from the outside to the gas flow line 10B when performing the purging. The air introduction line 260 supplies air from the outside to the gas flow line 10B. An on-off valve 241 is provided in the middle of the inert gas introduction line 240. An on-off valve 261 is provided in the middle of the air introduction line 260. The opening and closing operation of each of the on-off valves 221, 231, 241, and 261 is controlled by the control device 60.

In such a configuration, when performing the purging, the on-off valve 241 is opened, and an inert gas is sent into a pipe system including the gas flow line 10B. The inert gas sent into the pipe system is sent to the first dilution section 20 through the gas flow line 10 as a purge gas together with the ammonia in the pipe system.

In addition, in a case where the purging of the pipe system progresses and the ammonia concentration in the pipe decreases (for example, in a case where the ammonia concentration is equal to or lower than an explosion limit of ammonia), the on-off valve 241 is closed and the on-off valve 261 is opened. In this way, air is sent from the outside to the pipe system including the gas flow line 10B through the air introduction line 260. As a result, the amount of the inert gas used during the purging can be reduced.

In a state where air is sent to the gas flow line 10B through the air introduction line 260, the ammonia concentration in the pipe system is lowered. In such a case, the on-off valves 231 and 221 may be opened, and the ammonia-containing gas may be sent from the first sending line 30 to the second dilution section 50 from the gas flow line 10B through the connection line 230 and the introduction line 220.

The gas suction section 200 suctions the ammonia-containing gas from the outside of the second dilution section 50 into the second dilution section 50. The gas suction section 200 suctions, for example, the ammonia-containing gas flowing through the gas flow line 10B from the gas flow line 10B into the second dilution section 50. As the gas suction section 200, for example, an ejector 205, a mixer (not shown), or the like can be used. In the present embodiment, a case where the ejector 205 is provided as the gas suction section 200 is provided as an exemplary example.

The ejector 205 is provided, for example, in the middle of a liquid supply line 207 that supplies the second absorbing liquid L2 to the second dilution section 50. The second absorbing liquid L2 is pumped through the liquid supply line 207 by a pump 208 or the like provided in the middle of the liquid supply line 207. The ejector 205 has a connection line 209 connected to the introduction line 220. An on-off valve 203 is provided in the middle of the connection line 209.

The ejector 205 can use the second absorbing liquid L2 to be pumped as a driving fluid, and can cause a negative pressure generated when the second absorbing liquid L2 passes through the ejector 205 to act on the introduction line 220 and the gas flow line 10B through the connection line 209. Specifically, the on-off valve 203 is opened, and the negative pressure generated by the ejector 205 is allowed to act on the introduction line 220 and the gas flow line 10B, so that the ammonia-containing gas in the gas flow line 10B is suctioned and sent to the second dilution section 50 through the ejector 205 and the liquid supply line 207.

The suction by the ejector 205 may be performed, for example, at the end of the purging or after the end of the purging. In this way, when the gas flow line 10B is purged, the ammonia-containing gas remaining in the gas flow line 10B can be suctioned by the gas suction section 200 and sent to the second dilution section 50, so that a small amount of the ammonia-containing gas can be treated by the second dilution section 50. In addition, the suction by the ejector 205 may be performed for other purposes such as reducing the residual pressure in the pipe system including the gas flow line 10B.

### (Operation and Effect)

In the second embodiment, the gas suction section 200 that suctions the ammonia-containing gas from the outside of the second dilution section 50 into the second dilution section 50 is provided, so that the ammonia contained in the ammonia-containing gas suctioned by the gas suction section 200 can be absorbed by the second absorbing liquid L2 in the second dilution section 50.

In addition, in the second embodiment, the gas suction section 200 suctions the ammonia-containing gas flowing through the gas flow line 10B from the gas flow line 10B into the second dilution section 50. In this way, when the gas flow line 10B is purged, the ammonia-containing gas remaining in the gas flow line 10B can be suctioned by the gas suction section 200. Then, the ammonia contained in the ammonia-containing gas remaining in the gas flow line 10 can be absorbed by the second absorbing liquid L2 of the second dilution section 50. Therefore, it is possible to further reduce the ammonia concentration in the gas flow line 10 during the purging.

In addition, as in the first embodiment, the ammonia contained in the ammonia-containing gas can be efficiently abated by passing through the first dilution section 20 and the second dilution section 50, and the ammonia abatement efficiency can be increased.

### (Modification Example of Second Embodiment)

In order to promote the absorption of ammonia by the second absorbing liquid L2 in the second dilution section 50 of the second embodiment, for example, the second absorbing liquid L2 may be sprayed into the upper gas phase in the second dilution section 50 from the liquid supply line 207 via a spray nozzle or the like. In addition, as a method of absorbing the ammonia contained in the primary treated gas G1 into the second absorbing liquid L2, a method of bringing the gas and the liquid into contact with each other by directly immersing the pipe of the first sending line 30 in the second absorbing liquid L2 and releasing the primary treated gas G1 into the second absorbing liquid L2 may be used.

In addition, in the second embodiment, a case where the opening and closing operation of each of the on-off valves 203, 221, 231, 241, and 261 is controlled by the control device 60 has been provided as an exemplary example. However, there is no limitation to this configuration. For example, the opening and closing operation of each of the on-off valves 203, 221, 231, 241, and 261 may be manually performed by the worker or the like.

Furthermore, in the second embodiment, a case where the inert gas sent into the pipe system is sent to the first dilution section 20 through the gas flow line 10 as the purge gas together with the ammonia in the pipe system has been described. However, there is no limitation thereto, and for example, the purge gas can be sent to the second dilution section 50 through the bypass line 110 from the gas flow line 10 without being sent to the first dilution section 20.

### (First Modification Example of Second Embodiment)

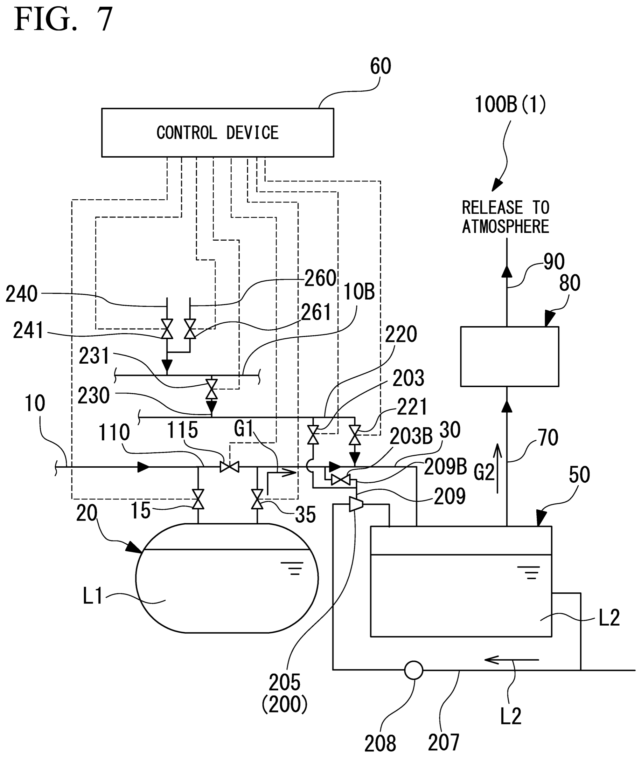

FIG. 7 is a diagram showing the configuration of an ammonia abatement system in a first modification example of the second embodiment of the present disclosure.

In the second embodiment described above, the gas suction section 200 suctions the ammonia-containing gas from the gas flow line 10B and sends the ammonia-containing gas to the second dilution section 50. However, there is no limitation to this configuration. For example, the gas suction section 200 may suction the primary treated gas G1 as the ammonia-containing gas from the first dilution section 20 to the second dilution section 50. In this case, for example, as shown in FIG. 7, the gas suction section 200 may be provided with another connection line 209B branched from the first sending line 30 and leading to the gas suction section 200, and an on-off valve 203B that is provided in the other connection line 209 and opens and closes the other connection line 209.

In addition, the gas suction section 200 may suction the ammonia-containing gas from a location other than the gas flow line 10B and the first dilution section 20.

### <Third Embodiment>

Next, an ammonia abatement system and a floating body according to a third embodiment of the present disclosure will be described. Since the third embodiment is different from the first and second embodiments only in a configuration including a tank 300, an ammonia water production section 310, a denitration device 320, and a denitrification treatment section 350, the same parts as those in the first and second embodiments will be denoted by the same reference signs and described with reference to FIG. 1, and an overlapping description will be omitted.

### (Configuration of Ammonia Abatement System)

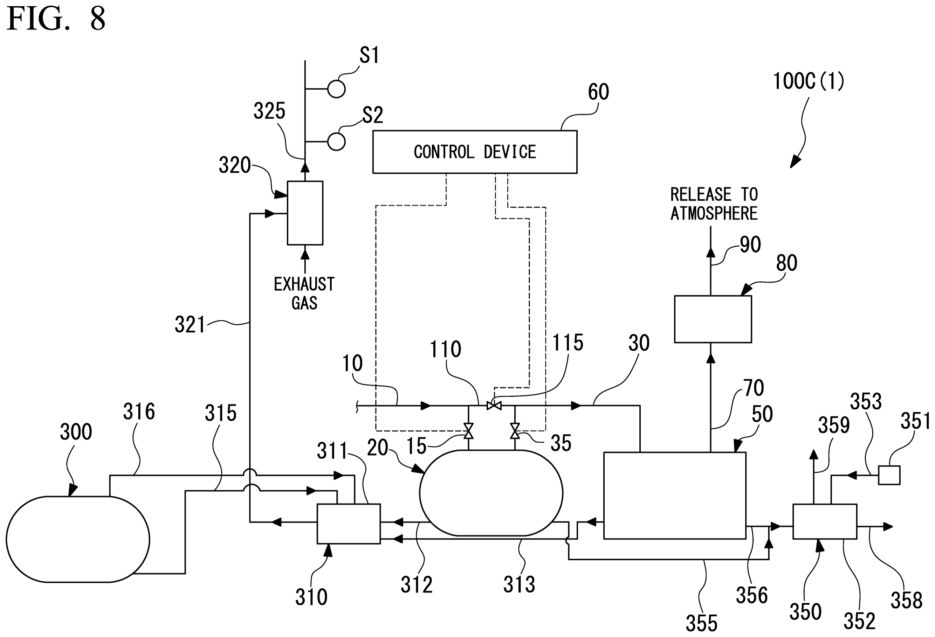

FIG. 8 is a diagram showing the configuration of an ammonia abatement system according to the embodiment of the present disclosure.

As shown in FIG. 8, an ammonia abatement system 100C includes the gas flow line 10, the first dilution section 20, the first sending line 30, the second dilution section 50, the second sending line 70, the third dilution section 80, the control device 60, a tank 300, an ammonia water production section 310, the denitration device 320, and the denitrification treatment section 350.

The tank 300 can store ammonia. The tank 300 can store, for example, ammonia as the fuel of the combustion device 8. The ammonia stored in the tank 300 may be, for example, ammonia as a cargo of the floating body 1 which is a marine vessel.

The ammonia water production section 310 includes an ammonia water storage tank 311, a first connection line 312, and a second connection line 313.

The ammonia water storage tank 311 can store the ammonia water produced in the ammonia water production section 310.

The first connection line 312 connects the ammonia water storage tank 311 and the liquid phase in the first dilution section 20. An on-off valve (not shown) is provided in the middle of the first connection line 312, and the supply of the ammonia liquid from the liquid phase in the first dilution section 20 to the ammonia water storage tank 311 can be intermittently performed.

The second connection line 313 connects the ammonia water storage tank 311 and the liquid phase in the second dilution section 50. An on-off valve (not shown) is provided in the middle of the second connection line 313, and the supply of the ammonia liquid from the liquid phase in the second dilution section 50 to the ammonia water storage tank 311 can be intermittently performed.

The ammonia water production section 310 can supply fresh water or seawater to the ammonia water storage tank 311 through a water supply line (not shown). The ammonia water production section 310 produces ammonia water by mixing an ammonia liquid that is introduced from the liquid phase in at least one of the first dilution section 20 and the second dilution section 50, with water.

In addition, the ammonia water production section 310 can introduce the ammonia stored in the tank 300. Therefore, the ammonia water production section 310 has a first tank connection line 315 and a second tank connection line 316.

The first tank connection line 315 connects the ammonia water production section 310 and the liquid phase in the tank 300. An on-off valve (not shown) is provided in the middle of the first tank connection line 315, and the supply of the ammonia liquid from the liquid phase in the tank 300 to the ammonia water storage tank 311 of the ammonia water production section 310 can be intermittently performed.

The second tank connection line 316 connects the ammonia water production section 310 and the gas phase in the tank 300. An on-off valve (not shown) is provided in the middle of the second tank connection line 316, and the supply of the ammonia gas from the gas phase in the tank 300 to the ammonia water storage tank 311 can be intermittently performed.

The ammonia water production section 310 can adjust the concentration of ammonia that is produced in the ammonia water storage tank 311, by introducing ammonia stored in the tank 300. In addition, the ammonia water production section 310 may receive an ammonia gas, such as an ammonia gas remaining after the ammonia in the tank 300 is released from the tank 300, or a boil-off gas generated by input heat from the outside in the tank 300, in the ammonia water storage tank 311.

The ammonia water produced in the ammonia water production section 310 can be used for appropriate use in the floating body 1.

In the present embodiment, for example, the ammonia water produced in the ammonia water production section 310 is used as a reductant of the denitration device 320.

The denitration device 320 performs denitration treatment on an exhaust gas that is discharged from the combustion device 8 that combusts fuel. The denitration device 320 and the ammonia water storage tank 311 are connected to each other via a reductant supply line 321. A pump (not shown) is provided in the middle of the reductant supply line 321, and the ammonia water stored in the ammonia water storage tank 311 can be supplied to the denitration device 320 as a reductant. The ammonia water supplied to the denitration device 320 through the reductant supply line 321 may have at least a concentration such that a nitrogen oxide can be decomposed in the denitration device 320.

The denitration device 320 uses the ammonia water that is produced in the ammonia water production section 310 and supplied through the reductant supply line 321 as a reductant and performs the denitration treatment on the exhaust gas. The exhaust gas that has been subjected to the denitration treatment in the denitration device 320 is discharged from the funnel 9 (refer to FIG. 1) or the like through an exhaust line 325 connected to the denitration device 320.

Here, in the third embodiment, a NOx determination unit S1 and an ammonia determination unit S2 are further provided. The NOx determination unit S1 determines the concentration of the nitrogen oxide on the exhaust side of the denitration device 320. The ammonia determination unit S2 determines the ammonia concentration on the exhaust side of the denitration device 320. In the present embodiment, the ammonia water supply amount from the ammonia water production section 310 to the denitration device 320 and the concentration of the ammonia water that is produced by the ammonia water production section 310 are adjusted such that the concentration of the nitrogen oxide determined by the NOx determination unit S1 is equal to or less than a regulated value. In addition, in the present embodiment, the amount of the ammonia water that is supplied to the denitration device 320 is adjusted based on the determination result of the ammonia determination unit S2 such that the ammonia water is not excessively supplied to the denitration device 320. The NOx determination unit S1 and the ammonia determination unit S2 may be provided as necessary, and may be omitted.

The denitrification treatment section 350 is capable of denitrifying an ammonia-containing discharged liquid, which is discharged from the liquid phase in at least one of the first dilution section 20 and the second dilution section 50. In other words, the denitrification treatment section 350 is configured to be capable of discharging a nitrogen compound in the discharged liquid to the outside of the floating body main body 2 as molecular nitrogen by performing the denitrification treatment. In the present embodiment, the denitrification treatment section 350 includes a first discharged liquid line 355 and a second discharged liquid line 356.

The first discharged liquid line 355 connects the denitrification treatment section 350 and the liquid phase in the first dilution section 20. An on-off valve (not shown) is provided in the middle of the first discharged liquid line 355, and the supply of the ammonia liquid from the liquid phase in the first dilution section 20 to the denitrification treatment section 350 can be intermittently performed.

The second discharged liquid line 356 connects the denitrification treatment section 350 and the liquid phase in the second dilution section 50. An on-off valve (not shown) is provided in the middle of the second discharged liquid line 356, and the supply of the ammonia gas from the liquid phase in the second dilution section 50 to the denitrification treatment section 350 can be intermittently performed.

The denitrification treatment section 350 performs the denitrification treatment by an appropriate method. For example, the denitrification treatment section 350 may perform the denitrification treatment by using, for example, a strongly acidic chemical liquid or the like as a reactant. In the present embodiment, the denitrification treatment section 350 performs the denitrification treatment by using, for example, a seawater electrolyte.

The denitrification treatment section 350 includes an electrolysis unit 351 and a denitrification reaction unit 352. The electrolysis unit 351 produces a seawater electrolyte containing sodium hypochlorite by performing electrolysis on seawater introduced from the sea around the floating body 1 outside the floating body 1. The seawater electrolyte produced in the electrolysis unit 351 is supplied to the denitrification reaction unit 352 through a reactant supply line 353.

The denitrification reaction unit 352 mixes the discharged liquid containing ammonia that is discharged from the liquid phase in at least one of the first dilution section 20 and the second dilution section 50 through the first discharged liquid line 355 and the second discharged liquid line 356, with the seawater electrolyte that is supplied through the reactant supply line 353. The denitrification reaction unit 352 performs the denitrification treatment on the discharged liquid containing ammonia by causing the discharged liquid containing ammonia to react with the seawater electrolyzed water. That is, the denitrification reaction unit 352 uses each of ammonia, which is a nitrogen compound contained in the discharged liquid, and a nitrogen compound produced in the process of decomposing the ammonia, as molecular nitrogen.

The molecular nitrogen generated by the denitrification treatment in the denitrification reaction unit 352 is exhausted to the outside from the funnel 9 (refer to FIG. 1), a vent post (not shown), or the like through an exhaust line 359 connected to the denitrification reaction unit 352.

In addition, the liquid (water or a liquid containing a diluted component) that has been subjected to the denitrification treatment by the denitrification reaction unit 352 is discharged to the outside of the denitrification reaction unit 352 through a drainage line 358 connected to the denitrification reaction unit 352. The liquid that is discharged through the drainage line 358 may be discharged, for example, to the sea outside the floating body 1, may be reused in the floating body 1, or may be stored in the floating body 1 and landed. Further, the liquid (water or a liquid containing a diluted component) in which the nitrogen compound has been removed from the discharged liquid by the denitrification treatment in the denitrification reaction unit 352 may be returned to the first dilution section 20 and the second dilution section 50 and reused as the first absorbing liquid L1 of the first dilution section 20 and the second absorbing liquid L2 of the second dilution section 50.

### (Operation and Effect)

In the third embodiment, the ammonia water production section 310 produces ammonia water by mixing the ammonia liquid, which is introduced from the liquid phase in at least one of the first dilution section 20 and the second dilution section 50, with water. In this way, it is possible to produce ammonia water, based on the ammonia recovered from the ammonia-containing gas, and it is possible to effectively utilize the ammonia.

In addition, in the third embodiment, the ammonia water produced in the ammonia water production section 310 is used as the reductant of the denitration device 320.

In this way, in the denitration device 320, the denitration treatment can be performed on an exhaust gas that is discharged from the combustion device that discharges an exhaust gas by combusting fuel. Nitrogen can be extracted from the exhaust gas which is a nitrogen compound, and can be discharged as a nitrogen single body. In this way, the ammonia recovered from the ammonia-containing gas can be effectively utilized.

In the third embodiment, the ammonia water production section 310 produces ammonia water by mixing the ammonia introduced from at least one of the liquid phase and the gas phase in the tank 300 capable of storing ammonia with an ammonia liquid and water. In this way, it is possible to easily adjust the ammonia concentration of the produced ammonia water by the ammonia stored in the tank 300.

In the third embodiment, the denitrification treatment section 350 is provided, so that it is possible to denitrify the discharged liquid containing ammonia, which is discharged from the liquid phase in at least one of the first dilution section 20 and the second dilution section 50. In this way, it is possible to discharge the nitrogen compound contained in the discharged liquid as molecular nitrogen.

In the third embodiment, the denitrification treatment section 350 reacts a mixed liquid of the seawater electrolyte containing sodium hypochlorite and the discharged liquid. In this way, it is not necessary to store a strongly acidic chemical liquid for decomposing ammonia. Therefore, it is possible to perform the denitrification treatment while suppressing an increase in cost.

In addition, as in the first embodiment, the ammonia contained in the ammonia-containing gas is efficiently absorbed by sequentially passing through the first dilution section 20 and the second dilution section 50. In this way, the ammonia abatement efficiency is increased.

### (Modification Example of Third Embodiment)

In the third embodiment, the supply destination of the ammonia water is the denitration device 320. However, the supply destination of the ammonia water is not limited to the denitration device. The supply destination of the ammonia water may be a device of a different type from the denitration device 320 as long as the device can effectively utilize ammonia water and can decompose ammonia into nitrogen. As another type of device capable of decomposing ammonia into nitrogen, for example, a combination of an ammonia stripping device and a fuel cell can be provided as an exemplary example.

### (First Modification Example of Third Embodiment)

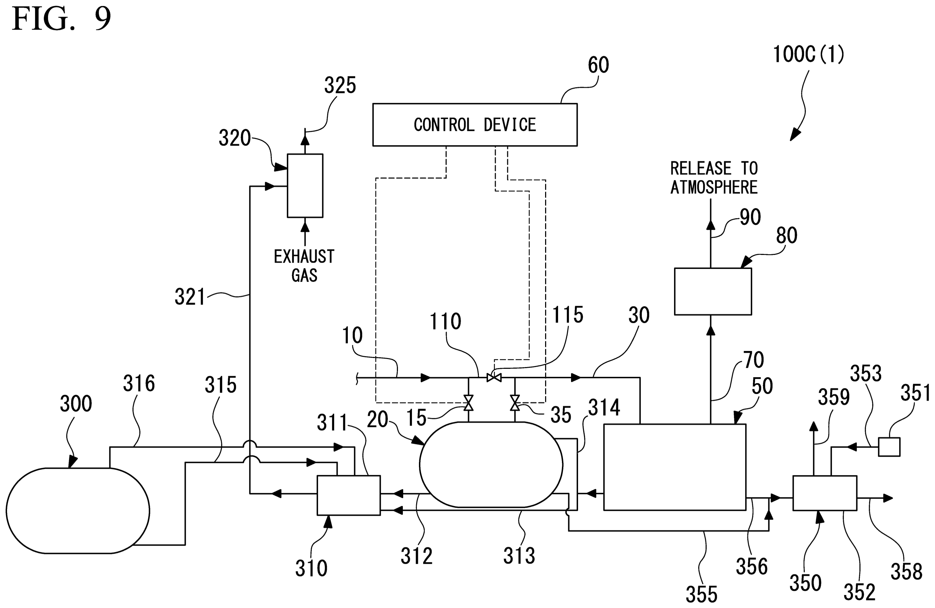

FIG. 9 is a diagram showing the configuration of an ammonia abatement system according to a first modification example of the third embodiment of the present disclosure.

As shown in FIG. 9, the ammonia abatement system 100C of the first modification example of the third embodiment further includes a shift line 314 capable of transferring the second absorbing liquid L2 stored in the second dilution section 50 to the first dilution section 20, in addition to the configuration of the third embodiment.

According to the first modification example of the third embodiment, the second absorbing liquid L2 into which ammonia is absorbed by the second dilution section 50 can be utilized by the first dilution section 20, and ammonia can be further absorbed into the second absorbing liquid L2 of the second dilution section 50. Therefore, this leads to effective utilization of the second absorbing liquid L2 of the second dilution section 50.

### (Modification Example of First to Third Embodiments)

In the first to third embodiments, the ammonia-containing gas can be directly sent to the second dilution section 50 through the bypass line 110 without passing through the first dilution section 20. However, there is no limitation to this configuration.

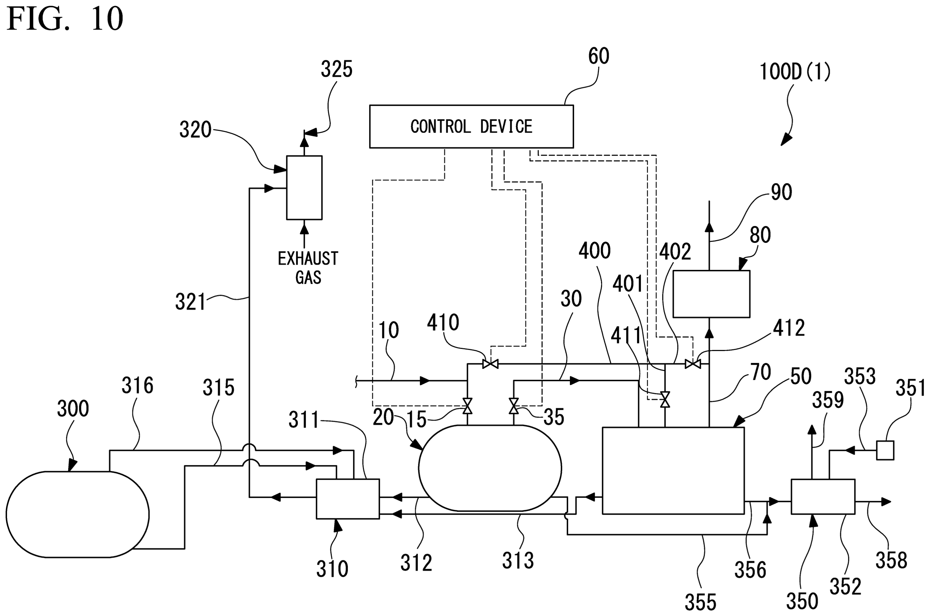

For example, as in a modification example shown in FIG. 10, a bypass line 400 branched from the gas flow line 10 may be connected to the second sending line 70. The bypass line 400 is connected to the gas flow line 10 on the upstream side of the on-off valve 15. An on-off valve 410 that intermittently allows an ammonia-containing gas to flow into the bypass line 400 is provided in the middle of the bypass line 400.

In addition, the bypass line 400 may have a first branch line 401 that is branched from the bypass line 400 and is connected to the second dilution section 50, and a second branch line 402 that is connected to the second sending line 70. An on-off valve 411 is provided in the middle of the first branch line 401. An on-off valve 412 is provided in the middle of the second branch line 402. By opening and closing the on-off valves 411 and 412, the supply destination of the ammonia-containing gas flowing into the bypass line 400 when the on-off valve 410 is opened can be appropriately selected from the second dilution section 50 and the second sending line 70.

By providing such a bypass line 400, when releasing the residual pressure in the gas flow line 10 or the like, the residual pressure of the gas in the gas flow line 10 can be released quickly through the bypass line 400.

In the modification example shown in FIG. 10, as in the first modification example (refer to FIG. 3) of the first embodiment, a plurality of bypass lines 400 and a plurality of on-off valves 410 may be provided to have redundancy. Further, in the modification example shown in FIG. 10, as in the second modification example of the first embodiment, a single three-way valve may be provided instead of the on-off valves 15 and 410. In addition, as described above, in order to have redundancy, an on-off valve may be provided in parallel with the three-way valve.

### (Other Embodiments)

The embodiments of the present disclosure have been described in detail above with reference to the drawings. However, the specific configuration is not limited to these embodiments, and design changes and the like within a scope which does not depart from the gist of the present disclosure are also included.

### <Additional Remark>

The ammonia abatement systems 100A to 100D and the floating body 1 described in each embodiment are understood as follows, for example.
(1) An ammonia abatement system 100A, 100B, 100C, or 100D according to a first aspect includes: a gas flow line 10 through which an ammonia-containing gas flows; a first dilution section 20 that causes ammonia contained in the ammonia-containing gas that is supplied from the gas flow line 10 to be absorbed into a first absorbing liquid L1 in a pressurized state; a first sending line 30 through which a gas in a gas phase in the first dilution section 20 is capable of being sent to an outside of the first dilution section 20 as a primary treated gas G1; a second dilution section 50 that causes ammonia contained in the primary treated gas G1 that is supplied through the first sending line 30 to be absorbed into a second absorbing liquid L2 under a pressure lower than a pressure in the first dilution section 20; and an adjustment valve 35 that is provided in the first sending line 30 and adjusts supply of the primary treated gas G1 from the first dilution section 20 to the second dilution section 50.
   In the ammonia abatement systems 100A to 100D, the ammonia contained in the ammonia-containing gas that is supplied from the gas flow line 10 is absorbed into the first absorbing liquid L1 in a pressurized state in the first dilution section 20. Then, the gas in a gas phase in the first dilution section 20 is sent to the outside of the first dilution section 20 through the first sending line 30 as the primary treated gas G1. In addition, in the second dilution section 50, the ammonia contained in the primary treated gas G1 is absorbed into the second absorbing liquid L2 under pressure lower than that in the first dilution section 20. In this way, the ammonia-containing gas can be retained in the first dilution section 20, and the ammonia can be abated by the batch processing. Therefore, it is possible to abate ammonia with a simple system configuration without using an absorption tower or the like, which is affected by the inclination of a marine vessel. Therefore, the ammonia abatement efficiency can be further increased.
(2) In an ammonia abatement system 100A, 100B, 100C, or 100D according to a second aspect, in the ammonia abatement system 100A, 100B, 100C, or 100D of the above (1), the first dilution section 20 brings the gas phase in the first dilution section 20 and a liquid phase in the first dilution section 20 into a gas-liquid equilibrium state.
   In this way, the ammonia contained in the ammonia-containing gas that is supplied from the gas flow line 10 can be maximally absorbed into the first absorbing liquid L1. Therefore, the gas can be sent to the second dilution section 50 in a state where the ammonia concentration of the gas in a gas phase in the first dilution section has been sufficiently reduced.
(3) In an ammonia abatement system 100A, 100B, 100C, or 100D according to a third aspect, the ammonia abatement system 100A, 100B, 100C, or 100D of the above (1) or (2) further includes: a control device 60 that controls an opening and closing operation of the adjustment valve 35, in which the control device 60 causes the adjustment valve 35 to transition from a closed state to an open state when the ammonia concentration of the gas phase in the first dilution section 20 falls below a specified value.
   In this way, the primary treated gas G1 in which the ammonia-containing gas is sufficiently absorbed into the first absorbing liquid L1 in the first dilution section 20 and the ammonia concentration is lower than the specified value can be supplied to the second dilution section 50. In this way, a load of ammonia absorption in the second dilution section 50 is reduced.
(4) In an ammonia abatement system 100A, 100B, 100C, or 100D according to a fourth aspect, in the ammonia abatement system 100A, 100B, 100C, or 100D of any one of the above (1) to (3), the second dilution section 50 causes the ammonia contained in the primary treated gas G1 to be absorbed into the second absorbing liquid L2 under an atmospheric pressure.
   In this way, the second dilution section 50 can have a simple configuration that does not require a device such as a pump for pressurization.
(5) In an ammonia abatement system 100A, 100B, 100C, or 100D according to a fifth aspect, the ammonia abatement system 100A, 100B, 100C, or 100D of any one of the above (1) to (4) further includes: a bypass line 110 that bypasses the first dilution section 20 and connects the gas flow line 10 and the first sending line 30.
   In this way, when the residual pressure of the gas flow line 10 or the like is released, the residual pressure of the gas in the gas flow line 10 can be quickly released through the bypass line 110.
(6) In an ammonia abatement system 100A, 100B, 100C, or 100D according to a sixth aspect, the ammonia abatement system 100A, 100B, 100C, or 100D of any one of the above (1) to (5) further includes: a second sending line 70 capable of sending a gas in a gas phase in the second dilution section 50 to an outside of the second dilution section 50 as a secondary treated gas G2; and a third dilution section 80 that reduces the concentration of ammonia contained in the secondary treated gas G2 that is supplied through the second sending line 70.
   In this way, the concentration of the ammonia contained in the secondary treated gas G2 can be further reduced.
(7) In an ammonia abatement system 100A, 100B, 100C, or 100D according to a seventh aspect, in the ammonia abatement system 100A, 100B, 100C, or 100D of any one of the above (1) to (6), the ammonia-containing gas is a purge gas containing an inert gas.
   In this way, the ammonia contained in the purge gas that flows in a large amount through the gas flow line 10 during the purging can be efficiently abated.
(8) In an ammonia abatement system 100A, 100B, 100C, or 100D according to an eighth aspect, in the ammonia abatement system 100A, 100B, 100C, or 100D of any one of the above (1) to (7), the ammonia-containing gas is a boil-off gas produced in a tank capable of storing ammonia.
   In this way, the ammonia contained in the boil-off gas produced in the tank capable of storing ammonia can be efficiently abated by the first dilution section 20 and the second dilution section 50.
(9) In an ammonia abatement system 100B according to a ninth aspect, the ammonia abatement system 100B of any one of the above (1) to (8) further includes: a gas suction section 200 that suctions the ammonia-containing gas from an outside of the second dilution section 50 into the second dilution section 50.
   In this way, the ammonia contained in the ammonia-containing gas suctioned in the gas suction section 200 can be absorbed by the second absorbing liquid L2.
(10) In an ammonia abatement system 100B according to a tenth aspect, in the ammonia abatement system 100B of the above (9), the gas suction section 200 suctions the ammonia-containing gas flowing through the gas flow line 10B from the gas flow line 10B into the second dilution section 50.
   In this way, for example, the ammonia-containing gas remaining in the gas flow line 10 can be suctioned in the gas suction section 200. Therefore, the ammonia contained in the ammonia-containing gas remaining in the gas flow line 10 can be absorbed by the second absorbing liquid L2 of the second dilution section 50. Therefore, it is possible to further reduce the ammonia concentration in the gas flow line 10.
(11) In an ammonia abatement system 100C according to an eleventh aspect, the ammonia abatement system 100C of any one of the above (1) to (10) further includes: an ammonia water production section 310 that produces ammonia water by mixing an ammonia liquid that is introduced from a liquid phase in at least one of the first dilution section 20 and the second dilution section 50, with water.
   In this way, it is possible to produce ammonia water, based on the ammonia recovered from the ammonia-containing gas, and it is possible to effectively utilize the ammonia.
(12) In an ammonia abatement system 100C according to a twelfth aspect, the ammonia abatement system 100C of the above (11) further includes: a denitration device 320 that performs denitration treatment on an exhaust gas that is discharged from a combustion device 8 that discharges the exhaust gas by combusting fuel, in which the ammonia water produced in the ammonia water production section 310 is used as a reductant of the denitration device 320.
   In this way, it is possible to perform the denitration treatment on an exhaust gas that is discharged from the combustion device 8 that discharges an exhaust gas by combusting fuel. Therefore, the ammonia recovered from the ammonia-containing gas can be effectively utilized.
(13) In an ammonia abatement system 100C according to a thirteenth aspect, the ammonia abatement system 100C of the above (11) or (12) further includes: a tank 300 capable of storing ammonia, in which the ammonia water production section 310 produces the ammonia water by mixing ammonia that is introduced from at least one of a liquid phase and a gas phase of the tank 300 with the ammonia liquid and the water.
   In this way, it is possible to easily adjust the ammonia concentration of the produced ammonia water by the ammonia stored in the tank 300.
(14) In an ammonia abatement system 100C according to a fourteenth aspect, the ammonia abatement system 100C of the above (13) further includes: at least one of a NOx determination unit S1 that determines the nitrogen oxide concentration of an exhaust gas that is discharged from the denitration device 320, and an ammonia determination unit S2 that determines the ammonia concentration of the exhaust gas that is discharged from the denitration device 320.
   In this way, it is possible to adjust the amount of ammonia that is supplied to the denitration device 320 according to the nitrogen oxide concentration of the exhaust gas and the ammonia concentration of the exhaust gas.
(15) In an ammonia abatement system 100C according to a fifteenth aspect, the ammonia abatement system 100C of any one of the above (1) to (14) further includes: a denitrification treatment section 350 capable of denitrifying an ammonia-containing discharged liquid that is discharged from a liquid phase in at least one of the first dilution section 20 and the second dilution section 50.
   In this way, it is possible to discharge the nitrogen compound contained in the discharged liquid as molecular nitrogen.
(16) In an ammonia abatement system 100C according to a sixteenth aspect, in the ammonia abatement system 100C of the above (15), the denitrification treatment section 350 includes an electrolysis unit 351 that produces a seawater electrolyte containing sodium hypochlorite by performing electrolysis on seawater introduced from an outside, and a denitrification reaction unit 352 that reacts a mixed liquid of the discharged liquid and the seawater electrolyte produced in the electrolysis unit 351.
   According to such a configuration, it is not necessary to store a strongly acidic chemical liquid for decomposing ammonia. Therefore, it is possible to perform the denitrification treatment while suppressing an increase in cost.
(17) The floating body 1 according to a seventeenth aspect includes: a floating body main body 2: and the ammonia abatement system 100A, 100B, 100C, or 100D of any one of the above (1) to (16).

As an example of the floating body 1, a marine vessel such as a liquefied gas carrier, a ferry, a RORO ship, an automobile carrier, or a passenger ship, a floating storage unit (FSU), a floating storage and regasification unit (FSRU), or the like can be given.

In this way, it is possible to provide the floating body 1 including the ammonia abatement system 100A, 100B, 100C, or 100D that can further increase the ammonia abatement efficiency.

(18) An ammonia supply method according to an eighteenth aspect is an ammonia supply method in the ammonia abatement system 100C of the above (14), the method including: adjusting a supply amount of the ammonia water to the denitration device 320 or the concentration of the ammonia water, based on at least one of the nitrogen oxide concentration of the exhaust gas that is discharged from the denitration device 320 and the ammonia concentration of the exhaust gas that is discharged from the denitration device 320.

In this way, an appropriate amount of ammonia can be supplied to the denitration device 320.

### INDUSTRIAL APPLICABILITY

According to the ammonia abatement system, the floating body, and the ammonia supply method of the present disclosure, it is possible to further increase an ammonia abatement efficiency.

### REFERENCE SIGNS LIST

1 Floating body
2 Floating body main body
2a Bow
4 Superstructure
5A, 5B Broadside
6 Bottom
7 Upper deck
8 Combustion device
9 Funnel
10, 10B Gas flow line
15, 203, 221, 231, 241, 261, 410, 411, 412 On-off valve
20 First dilution section
30 First sending line
35 Adjustment valve
50 Second dilution section
60 Control device
70 Second sending line
80 Third dilution section
90 Exhaust line
100A to 100D Ammonia abatement system
110 Bypass line
115 Valve
200 Gas suction section
205 Ejector
207 Liquid supply line
208 Pump
209 Connection line
220 Introduction line
230 Connection line
240 Inert gas introduction line
260 Air introduction line
300 Tank
310 Ammonia water production section
311 Ammonia water storage tank
312 First connection line
313 Second connection line
314 Shift line
315 First tank connection line
316 Second tank connection line
320 Denitration device
321 Reductant supply line
325 Exhaust line
350 Denitrification treatment section
351 Electrolysis unit
352 Denitrification reaction unit
353 Reactant supply line
355 First discharged liquid line
356 Second discharged liquid line
358 Drainage line
359 Exhaust line
400 Bypass line
401 First branch line
402 Second branch line
415 Three-way valve
G1 Primary treated gas
G2 Secondary treated gas
L1 First absorbing liquid
L2 Second absorbing liquid
S1: NOx determination unit
S2 Ammonia determination unit

## Claims

1. An ammonia abatement system comprising:
a gas flow line through which an ammonia-containing gas flows;
a first dilution section configured to cause ammonia contained in the ammonia-containing gas that is supplied from the gas flow line to be absorbed into a first absorbing liquid in a pressurized state;
a first sending line through which a gas in a gas phase in the first dilution section is sent to an outside of the first dilution section as a primary treated gas;
a second dilution section configured to cause ammonia contained in the primary treated gas that is supplied through the first sending line to be absorbed into a second absorbing liquid under a pressure lower than a pressure in the first dilution section; and
an adjustment valve provided in the first sending line and configured to adjust supply of the primary treated gas from the first dilution section to the second dilution section.

2. The ammonia abatement system according to Claim 1,
wherein the first dilution section brings the gas phase in the first dilution section and a liquid phase in the first dilution section into a gas-liquid equilibrium state.

3. The ammonia abatement system according to Claim 1 or 2, further comprising:
a control device configured to control an opening and closing operation of the adjustment valve,
wherein the control device causes the adjustment valve to transition from a closed state to an open state when an ammonia concentration of the gas phase in the first dilution section falls below a predetermined value.

4. The ammonia abatement system according to Claim 1 or 2,
wherein the second dilution section causes the ammonia contained in the primary treated gas to be absorbed into the second absorbing liquid under an atmospheric pressure.

5. The ammonia abatement system according to Claim 1 or 2, further comprising:
a bypass line configured to bypass the first dilution section and to connect the gas flow line and the first sending line.

6. The ammonia abatement system according to Claim 1 or 2, further comprising:
a second sending line configured to send a gas in a gas phase in the second dilution section to an outside of the second dilution section as a secondary treated gas; and
a third dilution section configured to reduce a concentration of ammonia contained in the secondary treated gas that is supplied through the second sending line.

7. The ammonia abatement system according to Claim 1 or 2,
wherein the ammonia-containing gas is a purge gas containing an inert gas.

8. The ammonia abatement system according to Claim 1 or 2,
wherein the ammonia-containing gas is a boil-off gas produced in a tank that stores ammonia.

9. The ammonia abatement system according to Claim 1 or 2, further comprising:
a gas suction section configured to suction the ammonia-containing gas from an outside of the second dilution section into the second dilution section.

10. The ammonia abatement system according to Claim 9,
wherein the gas suction section suctions the ammonia-containing gas flowing through the gas flow line from the gas flow line into the second dilution section.

11. The ammonia abatement system according to Claim 1 or 2, further comprising:
an ammonia water production section configured to produce ammonia water by mixing an ammonia liquid that is introduced from a liquid phase in at least one of the first dilution section and the second dilution section, with water.

12. The ammonia abatement system according to Claim 11, further comprising:
a denitration device configured to perform denitration treatment on an exhaust gas that is discharged from a combustion device that discharges the exhaust gas by combusting fuel,
wherein the ammonia water produced in the ammonia water production section is used as a reductant of the denitration device.

13. The ammonia abatement system according to Claim 11, further comprising:
a tank configured to store ammonia,
wherein the ammonia water production section produces the ammonia water by mixing ammonia that is introduced from at least one of a liquid phase and a gas phase of the tank with the ammonia liquid and the water.

14. The ammonia abatement system according to Claim 12, further comprising:
at least one of a NOx determination unit configured to determine a nitrogen oxide concentration of an exhaust gas that is discharged from the denitration device, and an ammonia determination unit configured to determine an ammonia concentration of the exhaust gas that is discharged from the denitration device.

15. The ammonia abatement system according to Claim 1 or 2, further comprising:
a denitrification treatment section configured to denitrify an ammonia-containing discharged liquid that is discharged from a liquid phase in at least one of the first dilution section and the second dilution section.

16. The ammonia abatement system according to Claim 15,
wherein the denitrification treatment section includes
an electrolysis unit configured to produce a seawater electrolyte containing sodium hypochlorite by performing electrolysis on seawater introduced from an outside, and
a denitrification reaction unit configured to react a mixed liquid of the discharged liquid and the seawater electrolyte produced in the electrolysis unit.

17. A floating body comprising:
a floating body main body; and
the ammonia abatement system according to Claim 1 or 2.

18. An ammonia supply method in the ammonia abatement system according to Claim 14, the method comprising:
adjusting a supply amount of the ammonia water to the denitration device or a concentration of the ammonia water, based on at least one of the nitrogen oxide concentration of the exhaust gas that is discharged from the denitration device and the ammonia concentration of the exhaust gas that is discharged from the denitration device.
